# EUROPÄISCHE PATENTSCHRIFT

(11) **EP 2 043 752 B1**
(45) Veröffentlichungstag und Bekanntmachung des Hinweises auf die Patenterteilung: **23.12.2009**
(21) Anmeldenummer: 07725383.9
(22) Anmeldetag: 19.05.2007
(51) Int. Cl.: B01D 29/21, B01D 29/96, B01D 35/153, B01D 35/16

(54) **ÖLFILTERANORDNUNG**
OIL FILTER ASSEMBLY
ENSEMBLE FILTRE À HUILE

(30) Priorität: 21.07.2006 DE 102006034485; 09.02.2007 DE 202007002162 U
(43) Veröffentlichungstag der Anmeldung: 08.04.2009
(73) Patentinhaber: Joma-Polytec Kunststofftechnik GmbH, 72411 Bodelshausen (DE)
(72) Erfinder: MAIER, Jan, 72116 Mössingen (DE); KNÖLL, Matthias, 72574 Bad Urach (DE); PFITZER, Friedhelm, 72414 Rangendingen (DE)
(74) Vertreter: Bulling, Alexander
(86) Internationale Anmeldenummer: PCT/EP2007/004475
(87) Internationale Veröffentlichungsnummer: WO 2008/009323

(56) Entgegenhaltungen:
- EP-A- 1 479 427
- EP-A- 1 616 612
- JP-A- 2000 288 317

## Beschreibung

Die Erfindung betrifft eine Ölfilteranordnung mit einem mit einem Deckelelement verschließbaren Aufnahmeraum und mit einem im Aufnahmeraum befestigten und federbeaufschlagten Stützrohr zur Aufnahme eines radial mit Öl durchströmbaren Filterelements, wobei das Stützrohr in axialer Richtung zwischen einer Betriebslage und einer Ablasslage derart verlagerbar angeordnet ist, dass es bei mit dem Deckelelement verschlossenem Aufnahmeraum in der Betriebslage eine Ablassöffnung verschließt und bei geöffnetem Aufnahmeraum in der Ablasslage eine Ablassöffnung freigibt. Bei einer derartigen Ölfilteranordnung ist das Stützrohr derart am Aufnahmeraum befestigt, dass es bei einem Austausch des Filterelements im Gehäuse verbleibt. Der Aufnahmeraum kann dabei mit dem Deckelelement durch beispielsweise Aufschrauben des Deckelelements oder durch Aufklappen oder Aufrasten auf den Aufnahmeraum verschlossen werden. Zur Federbeaufschlagung des Stützrohrs kann insbesondere ein Federelement vorgesehen sein, dass das Stützrohr in Richtung Ablasslage beaufschlagt. Das Federelement kann sich dabei einerseits direkt am Stützrohr und andererseits an einem den Aufnahmeraum bildenden Gehäuse abstützen.

Aus der WO01/17657 A2 (= EP1137470 A2) ist eine Ölfilteranordnung bekannt geworden, bei der ein Ablassdom gemeinsam mit einem Filtereinsatz axial beweglich zwischen einer ersten, eine Ablassleitung verschließenden Stellung und einer zweiten, die Ablassleitung freigebenden Stellung gelagert ist, wobei der Ablassdom filtergehäusefest angeordnet ist und federbeaufschlagt in seine Freigabestellung gedrängt ist. Der Ablassdom wird dabei entgegen der Federwirkung mittels des in das Filtergehäuse eingesetzten Filtereinsatzes in seine Schließstellung bewegt.

Aus der EP 1 106 795 A1 (= DE 600 18 360 T2) ist ein Flüssigkeitsfilter bekannt geworden, der ein Verschlussorgan aufweist, dass dazu geeignet ist, in einen Entleerungskanal einzudringen und dabei diesen Kanal zu schließen, wenn ein Deckel des Filtereinsatzes den Aufnahmeraum verschließt. Das Verschlussorgan öffnet allerdings den Entleerungskanal, wenn der Filtereinsatz aus dem Aufnahmeraum entnommen wird. Um das Verschlussorgan in der Betriebslage zu halten, ist am Filtereinsatz ein Anschlag vorgesehen, der mit dem Verschlussorgan zusammenwirkt um dieses bei geschlossenem Deckelelement in der Betriebslage zu halten. Sowohl bei der WO01/17657 A2 als auch bei der EP 1 106 795 A1 hat sich als nachteilig herausgestellt, dass das Filterelement eine gewisse Eigensteifigkeit aufweisen muss, um den Ablassdom beziehungsweise das Verschlussorgan gegen die Federbeaufschlagung in der Betriebslage zu halten.

Der vorliegenden Erfindung liegt die Aufgabe zugrunde, eine Ölfilteranordnung der eingangs genannten Art weiterzubilden und dabei den Nachteilen des Standes der Technik abzuhelfen. Insbesondere soll eine Ölfilteranordnung bereitgestellt werden, die funktionssicher arbeitet und bei der ein Austausch des Filterelements auf einfache Art und Weise möglich ist. Das Filterelement selbst soll dabei einen möglichst einfachen Aufbau aufweisen.

Diese Aufgabe wird mit einer Ölfilteranordnung mit den Merkmalen des Anspruchs 1 gelöst. Die erfindungsgemäße Ölfilteranordnung sieht folglich vor, dass das Deckelelement auf seiner dem Aufnahmeraum zugewandten Seite einen Stützrohranlagebereich derart aufweist, dass bei auf dem Stützrohr angeordnetem Filterelement während des Schließens des Aufnahmeraums das Stützrohr direkt vom Stützrohranlagebereich beaufschlagt und in die Betriebslage verlagert wird. Anders als beim vorbekannten Stand der Technik wird folglich das Stützrohr unmittelbar und direkt vom Deckelelement, über dessen Stützrohranlagebereich, beim Schließen des Deckels in die Betriebslage gebracht. Dabei erfolgt also die Verlagerung des Stützrohrs in die Betriebslage nicht über das Filterelement, sondern direkt über das Deckelelement, das gegen das Stützrohr wirkt. Dies hat den Vorteil, dass das Filterelement selbst keine hohe Eigensteifigkeit aufweisen muss und deshalb vergleichsweise einfach aufgebaut sein kann. Insbesondere muss das Filterelement keine, in axialer Richtung Kräfte übertragenden, Bauteile vorsehen. Es hat sich beim Stand der Technik nämlich herausgestellt, dass bei Filterelementen, die über einen längeren Zeitraum im Einsatz sind, die Eigensteifigkeit in axialer Richtung nachlassen kann, wodurch eine ungewollte Verlagerung des Stützrohrs in die Ablassstellung auftreten kann. Gemäß der Erfindung ist also entscheidend, dass das Stützrohr nicht über das Filterelement in der Betriebslage gehalten wird.

Die eingangs genannte Aufgabe wird auch durch eine Ölfilteranordnung mit den Merkmalen des Anspruchs 2 gelöst. Hierbei ist insbesondere vorgesehen, dass das Deckelelement auf seiner dem Aufnahmeraum zugewandten Seite einen Stützrohranlagebereich derart aufweist, dass bei auf dem Stützrohr angeordnetem Filterelement und geschlossenem Aufnahmeraum der Stützrohranlagebereich das Stützrohr direkt in der Betriebslage hält. Der Stützrohranlagebereich dient folglich dazu, im Betrieb der Ölfilteranordnung das Stützrohr in seiner Betriebslage zu halten. Auch dies hat den Vorteil, dass beim Betrieb der Ölfilteranordnung das Filterelement keine axialen Kräfte zu übertragen hat, um das Stützrohr in der Betriebslage zu halten. Insofern kann der Aufbau des Filterelements einfacher ausfallen, als bei den Ölfilteranordnungen gemäß dem vorbekannten Stand der Technik.

Das Stützrohr kann selbstverständlich an seinem freien Ende Funktionsbauteile umfassen, wobei die Funktionsbauteile des Stützrohrs dann mit dem Stützrohranlagebereich zusammenwirken. Als Funktionsbauteil kommt insbesondere ein Überdruckventil in Betracht, das bei zugesetztem Filterelement, und einem daraus resultierenden höheren Druck im Bereich der Rohölseite, öffnet. Das Öl kann dann ungefiltert die Ölfilteranordnung passieren.

Für ein vorteilhaftes Zusammenwirken des Stützelements mit dem Deckelelement beim Schließen des Aufnahmeraums, beziehungsweise bei geschlossenem Aufnahmeraum, kann vorgesehen sein, dass das Stützrohr bei auf dem Stützrohr angeordnetem Filterelement in Richtung zum Deckel hin überragt. Dadurch wird eine vorteilhafte Angriffsfläche für den Stützrohranlagebereich des Deckels gebildet.

Das Deckelelement kann gemäß einer weiteren Ausführungsform der Erfindung neben dem Stützrohranlagebereich auch einen Filterelementanlagebereich derart aufweisen, dass während des Schließens des Aufnahmeraums das Filterelement direkt vom Filterelementanlagebereich in eine Betriebsposition auf dem Stützrohr verschoben wird. Sollte der Fall auftreten, dass bei einem Wechsel des Filterelements das Filterelement nicht weit genug auf das Stützrohr aufgeschoben wird, so wird beim Schließen des Aufnahmeraums das Stützrohr in seine Betriebsposition verschoben. Bei geschlossenem Deckel ist das Filterelement allerdings in seiner Betriebsposition und in der Betriebslage des Stützrohrs so angeordnet, dass über das Filterelement im Wesentlichen keine Axialkräfte übertragen werden.

Dabei ist denkbar, dass der Stützrohranlagebereich und der Filterelementanlagebereich in axialer Richtung in verschiedenen Ebenen liegen und/oder das der Stützrohranlagebereich am Deckelelement radial weiter innen angeordnet ist als der Filterelementanlagebereich. Dies hat den Vorteil, dass der Stützrohranlagebereich klar getrennt vom Filterelementanlagebereich im Deckelelement vorgesehen ist.

Der Stützrohranlagebereich kann dabei insbesondere von dem Stützrohr zugewandten Stirnseiten von sich in axialer Richtung erstreckenden Stegen oder Längsrippen im Deckelinneren gebildet sein. Dies hat den Vorteil, dass, falls am freien Ende des Stützrohrs ein Überdruckventil angeordnet ist, Öl zwischen den Stegen beziehungsweise Längsrippen hindurch zum Eingang des Überdruckventils fließen kann.

Auch der Filterelementanlagebereich kann von entsprechend ausgebildeten, am Deckel angeordneten und nach radial innen abstehenden Stegen oder Rippen gebildet sein, so dass zwischen diesen Rippen Öl das Filterelement umströmen kann und zum Ventileingang des Überdruckventils gelangen kann.

Zur beweglichen Befestigung des Stützrohrs im Aufnahmeraum können insbesondere im Bereich des Bodens des Aufnahmeraums sich in axialer Richtung erstreckende Verbindungszapfen vorgesehen sein, die mit am Stützrohr vorgesehenen Zapfenaussparungen zusammenwirken, wobei die Zapfenaussparungen an nach radial außen abstehenden Füßen oder an einem in nach radial außen gewandter Richtung abstehenden und wenigstens abschnittsweise umlaufenden Kragen des Stützrohrs angeordnet sind. Durch das Vorsehen derartiger Füße, beziehungsweise eines solchen Kragens, können in Querrichtung auf das Stützrohr, beziehungsweise auf das Stützrohr aufgesetzte Filterelement wirkende Kräfte vorteilhaft in das Gehäuse abgeleitet werden. Außerdem kann eine vorteilhafte, verliersichere Befestigung des Stützrohrs im Gehäuse realisiert werden. Bei der Montage des Stützrohrs kann dieses in axialer Richtung derart in den Aufnahmeraum eingeführt werden, dass die Verbindungszapfen in die Zapfenaussparungen eintauchen. Zur dauerhaften Befestigung des Stützrohrs im Aufnahmeraum können insbesondere die Verbindungszapfen als Schnapp- oder Rastzapfen ausgebildet sein, welche nach dem Einsetzen des Stützrohrs die die Zapfenaussparungen umgebenden Bereiche hintergreifen. Ferner ist denkbar, dass die Verbindungszapfen als Nietzapfen, insbesondere als Schweißnietzapfen, ausgebildet sind. Nach dem Einsetzen des Stützrohrs können die Nietzapfen derart heißgenietet werden, dass eine geeignete Verbindung des Stützrohrs mit dem Gehäuse erreicht wird.

Dabei kann über die Verbindungszapfen eine lösbare Verbindung des Stützrohrs im Aufnahmeraum erreicht werden. Dazu können die Zapfenaussparungen insbesondere bajonettartig ausgebildet sein. Das Stützrohr kann dann in axialer Richtung in den Aufnahmeraum derart eingesetzt werden, dass die Verbindungszapfen in die Zapfenaussparungen eingreifen. In einem weiteren Schritt können die freien Enden der Verbindungszapfen heißgenietet werden. Soll dann zu einem späteren Zeitpunkt das Stützrohr wieder aus dem Aufnahmeraum herausgenommen werden, kann dieses um seine Mittellängsachse so weit verdreht werden, bis die Nietköpfe in die Bereiche der Zapfenaussparungen gelangen, die eine Querschnittsfläche aufweisen, die größer ist als der Durchmesser der Heißnietköpfe. Das Stützrohr kann dann in axialer Richtung aus dem Aufnahmeraum herausgenommen werden.

Anstelle von heißgenieteten Verbindungszapfen können auch Verbindungszapfen in Form von Schrauben Verwendung finden, die eine dem Heißnietkopf entsprechende Aufweitung aufweisen.

Insbesondere kann dabei das den Aufnahmeraum bildende Gehäuse aus Kunststoff sein, wobei dann die Verbindungszapfen insbesondere an das Gehäuse angeformt sein können.

Für den Fall, dass die Verbindungszapfen im Bereich ihrer freien Enden eine Aufweitung aufweisen, ist insbesondere vorteilhaft, wenn der Abstand vom Boden des Aufnahmeraums zur Unterkante der Aufweitung wenigstens geringfügig größer ist als die sich in axialer Richtung erstreckende Dicke der Füße oder des Kragens. Hierdurch wird eine Verlagerung des Stützrohrs von der Betriebslage in die Ablasslage in axialer Richtung innerhalb des Aufnahmeraums ermöglicht.

Die pilzkopfartige Aufweitung kann, wie bereits erwähnt, -insbesondere durch Heißnieten nach dem Einsetzen des Stützrohrs und damit der Zapfenaussparungen in die Verbindungszapfen hergestellt sein.

Ferner ist denkbar, das die Zapfenaussparungen derart ausgebildet sind, dass das Stützrohr um seine Mittelachse um einen begrenzen Verdrehwinkel verdrehbar ist. Die Zapfenaussparungen können insbesondere ringsegmentartig oder, wie bereits angesprochen, bajonettartig ausgebildet sein. Die um die Mittellängsachse koaxial einander gegenüberliegenden Bereich einer Zapfenaussparung bilden dann Drehanschläge zur Begrenzung des Verdrehwinkels. Aufgrund der wenigstens bedingten Verdrehbarkeit des Stützrohrs um seine Längsachse kann erreicht werden, dass eine sich beispielsweise stützrohrseitig angeordnete Dichtung, die sich im Bereich der Ablassöffnung festgesetzt hat, durch Drehen gelöst werden kann. Dabei kann es ausreichend sein, wenn das Stützrohr um einen Verdrehwinkel von cirka 5° bis 15° verdrehbar angeordnet ist.

Um eine Verdrehung des Stützrohrs zu ermöglichen, ist denkbar, dass am Deckelelement Mitnahmeabschnitte, insbesondere in Form von Mitnahmerippen, vorgesehen sind, durch welche das Stützrohr und/oder das Filterelement insbesondere beim Auf- beziehungsweise Abschrauben des Deckelelements verdreht werden können. Diese Mitnahmeabschnitte können insbesondere am Filterelementanlagebereich beziehungsweise am Stützrohranlagebereich vorgesehen sein bzw. von diesen gebildet sein. Zum Eingriff der deckelelementseitigen Mitnahmeabschnitte können am Stützrohr beziehungsweise am Filterelement Aussparungen vorgesehen sein, die mit den jeweiligen Mitnahmeabschnitte zusammenwirken.

Das Stützrohr kann gemäß einer weiteren Ausbildung der Erfindung auf der dem Deckelelement abgewandten Seite und in dem vom Filterelement nicht abgedeckten Bereich einen in radialer Richtung geschlossenen, in einen einen Ölauslass aufweisenden Reinölraum eingreifenden Verlängerungsabschnitt aufweisen, der an seinem, dem Deckelelement abgewandten Bereich, wenigstens eine Reinölaustrittsöffnung aufweist. Hierdurch kann folglich vom Filterelement gefiltertes Reinöl durch den Verlängerungsabschnitt des Stützrohrs in den Reinölraum und von dort in den Ölauslass abfließen.

Der Bereich des Stützrohres, der vom Filterelement abgedeckt wird, weist Durchbrüche in radialer Richtung auf, durch welche das vom Filterelement gefilterte Reinöl in das Stützrohr einströmen kann. Das Filterelement liegt dabei vorteilhafterweise im Bereich seiner Endkappen unmittelbar dichtend am Stützrohr an.

Zur Abdichtung des Reinölraums gegenüber dem das nicht gefilterte Rohöl aufnehmenden Aufnahmeraums kann am Verlängerungsabschnitt ein umlaufender, in radialer Richtung überstehender Dichtbund angeformt sein.

Das Stützrohr kann dann an seinem freien Ende des Verlängerungsabschnitts vorteilhafterweise einen im Bereich der Mittellängsachse angeordneten Verschlussabschnitt zum Verschließen der Ablassöffnung in der Betriebsstellung aufweisen. Das Federelement, dass das Stützrohr in die Ablasslage beaufschlagt, kann dabei im Reinölraum um den Verlängerungsabschnitt des Stützrohrs angeordnet sein.

Ferner ist vorteilhaft, wenn das Deckelelement auf seiner dem Aufnahmeraum zugewandten Seite Hintergriffsabschnitt zum Hintergreifen von Filterelementabschnitten derart aufweist, dass das Filterelement mittels dem Deckelelement beim Abnehmen des Deckelelements vom Stützrohr abziehbar und aus dem Aufnahmeraum herausnehmbar ist. Die Hintergriffsabschnitte können dabei vom Filterelementanlagebereich gebildet sein. Die Filterelementabschnitte können insbesondere von der dem Deckel zugewandten Endscheibe des Filterelements, sofern dieses eine solche aufweist, gebildet sein.

Um ein selbsttätiges Hintergreifen der Hintergriffsabschnitte beim Aufschrauben des Deckelelements auf das Gehäuse zu erreichen ist vorteilhaft, wenn die Hintergriffsabschnitte auf der dem Filterelement zugewandten Seite Einführschrägen vorsehen.

Die Hintergriffsabschnitte können insbesondere als parallel zur Mittellängsachse des Filterelements verlaufende Federzungen gebildet sein, die vom Deckelelement abragen. Die Federzungen können dann nach radial innen gerichtete Hinterrastflächen zum Hintergreifen der Filterelementabschnitte vorsehen. Eine derartige Ausbildung hat den Vorteil, dass die federzungenartig ausgebildeten Hintergriffsabschnitte nach radial außen beim Aufschrauben des Deckelelements auf das Gehäuse ausweichen können und dann zum Hintergreifen nach radial innen die Filterelementabschnitte hinterschnappen.

Bei einer anderen Ausführungsform der Erfindung sind die Hintergriffsabschnitte als am Deckel angeordnete Stege gebildet, die eine im wesentlichen parallel zur Mittellängsachse des Filterelements verlaufende Kante vorsehen. Die Kante weist dann eine in radialer Richtung verlaufende Aussparung zum Hintergreifen der Filterelementabschnitte auf. Bei dieser Ausführungsform sind die Hintergriffsabschnitte folglich insbesondere nicht nach radial außen elastisch ausgebildet. Eine solche Anordnung kann insbesondere dann Verwendung finden, wenn die Filterelementabschnitte nach axial innen elastisch ausgebildet sind, so dass diese beim Fügen mit dem Deckel nachgebeben können.

Weitere Einzelheiten und vorteilhafte Ausgestaltungen der Erfindung sind der nachfolgenden Beschreibung zu entnehmen, anhand derer die in den Figuren dargestellten Ausführungsbeispiele näher beschrieben und erläutert sind.

Es zeigen:
- Figur 1: einen Längsschnitt durch eine erste erfindungsgemäße Ölfilteranordnung;
- Figur 2: einen Längsschnitt durch den oberen Teil der Ölfilteranordnung gemäß Figur 1;
- Figur 2.1: einen Ausschnitt aus Figur 2, eine etwas andere Ausführungsform zeigend,
- Figur 3: einen Längsschnitt durch den unteren Teil der Ölfilteranordnung gemäß Figur 1;
- Figur 4: einen Schnitt entsprechend Figur 3 in einer Montagestellung;
- Figur 5: einen Längsschnitt durch eine zweite erfindungsgemäße Ölfilteranordnung;
- Figur 6: einen Figur 5 ähnlichen Schnitt aus einer anderen Perspektive ohne Filterelement; und
- Figur 7: das in den Figuren 5 und 6 gezeigte Stützrohr in Einzelteildarstellung.

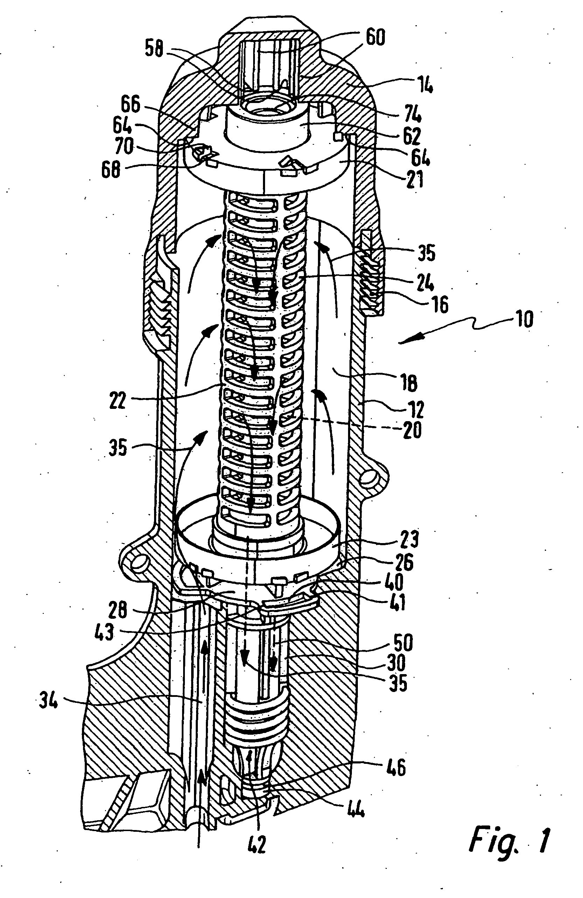

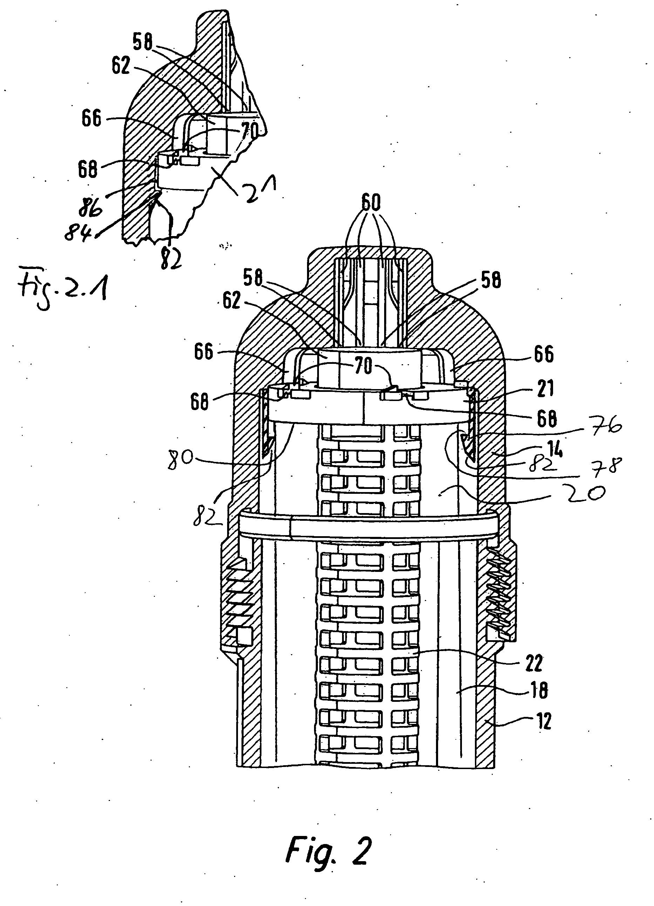

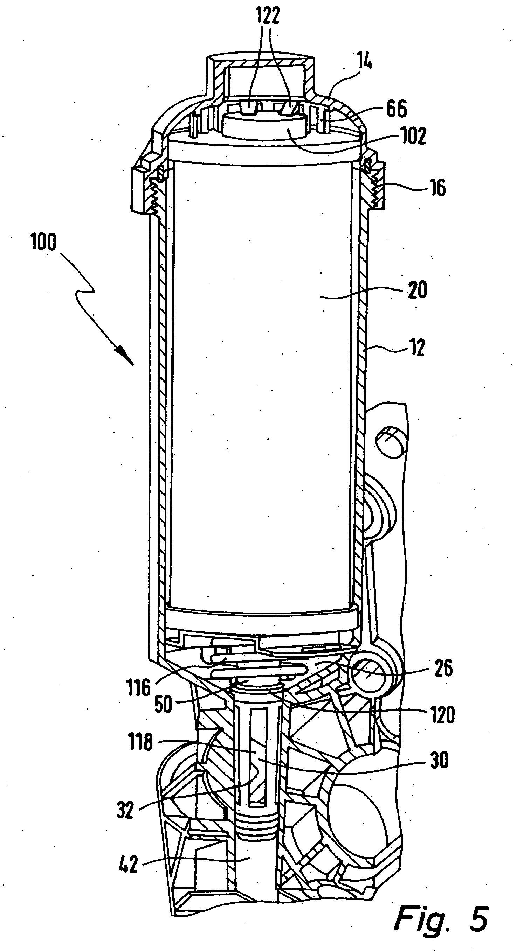

Die in den Figuren 1 bis 4 dargestellte Ölfilteranordnung 10 umfasst ein Gehäuse 12, das mit einem Deckel 14 über ein Gewinde 16 verschließbar ist. Das Gehäuse 12 und der Deckel 14 bilden einen Aufnahmeraum 18, in dem ein radial mit Öl durchströmbares Filterelement 20 angeordnet ist. In der Figur 1 und 2 sind zur Veranschaulichung der Funktionsweise lediglich die beiden Endkappen 21, 23 des Filterelements 20 dargestellt. Das Filterelement 20 wird von einem Stützrohr 22 getragen, das in dem Bereich, in dem es vom Filterelement 20 abgedeckt wird, zargenartig ausgebildet ist. Zur radialen Durchströmung des Stützrohres 22 mit Öl sind am Stützrohr eine Vielzahl von Durchbrüchen 24 vorgesehen. Das Stützrohr weist an seiner einem Boden 26 des Aufnahmeraums 18 zugewandten Seite einen nach radial außen gerichteten, umlaufenden Ringkragen 28 auf. Anstelle des Vorsehens des Ringkragens 28 ist denkbar, dass lediglich Ringkragenabschnitte oder Füße, wie sie bei der Ausführungsform gemäß den Figuren 5 bis 7 dargestellt sind, vorgesehen werden.

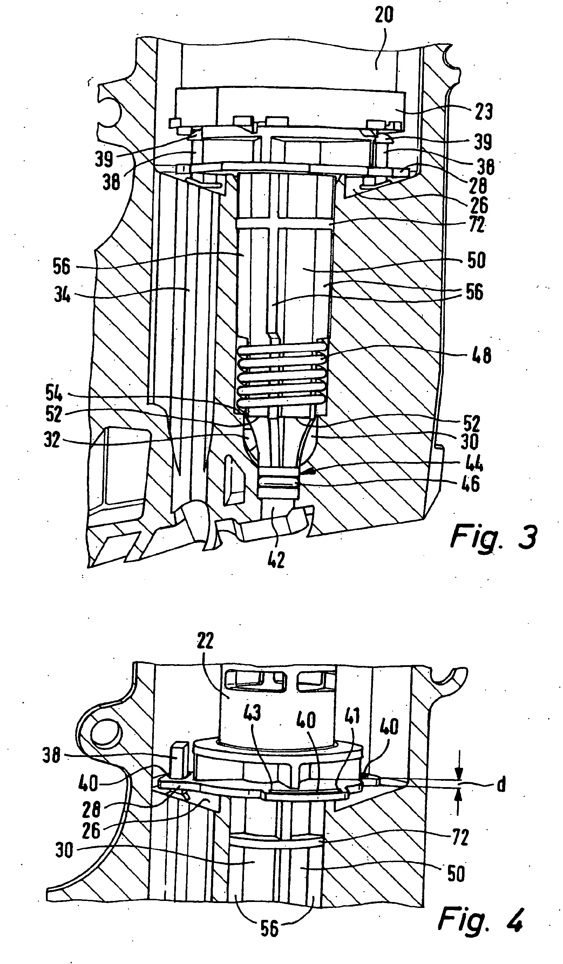

An den Aufnahmeraum 18 schließt sich in axialer, nach unten gewandter Richtung, ein Reinölraum 30 an, in dem an seinem axialen Ende ein Ölauslass 32 vorgesehen ist. Parallel zum Reinölraum 30 erstreckt sich innerhalb des Gehäuses 12, wie insbesondere aus Figur 1 und 3 deutlich wird, ein Öleinlass 34, durch welchen ungefiltertes Rohöl in den Aufnahmeraum 18 einströmen kann. Der Ölstrom im Betrieb der Ölfilteranordnung 10 ist in der Figur 1 durch die Pfeile 35 angedeutet. Im Betrieb der Ölfilteranordnung 10 strömt folglich zu filterndes Öl vom Öleinlass 34 durch das Filterelement 20 hin zum Ölauslass 32.

Das Stützrohr 22 ist in axialer Richtung von oben in den Aufnahmeraum 18 eingesetzt und ist dort unlösbar befestigt. Dazu sind im Bereich des Bodens 26, wie insbesondere aus Figuren 3 und 4 deutlich wird, sich in axialer Richtung erstreckende Verbindungszapfen 38 vorgesehen. Diese Verbindungszapfen 38 ragen dabei im montierten Zustand in am Ringkragen 28 vorgesehene Zapfenaussparungen 40. Wie aus Figur 1 deutlich wird, sind diese Zapfenaussparungen 40 ringsegmentartig ausgebildet. Zur Montage des Stützrohrs 22 wird dieses in axialer Richtung derart in den Aufnahmeraum eingeführt, dass die Verbindungszapfen 38 in die Zapfenaussparungen 40 eintauchen, wie in Figur 4 dargestellt.

Nach dem Einsetzten des Stützrohrs 22 werden die freien Enden der Verbindungszapfen 38 beispielsweise thermisch verformt, so dass sich an ihren freien Enden pilzkopfartige Aufweitungen 39, die in Figur 3 deutlich zu erkennen sind, entstehen. Der Abstand vom Boden 26 des Aufnahmeraums 18 zur Unterkante der Aufweitung 39 ist dabei so gewählt, dass eine Verlagerung des Stützrohrs 22 von der in den Figuren 1 bis 4 gezeigten Betriebslage in eine Ablasslage ermöglicht wird, in der die die Aussparungen 40 umgebenden Bereiche des Ringkragens 28 an der Unterseite der Aussparungen zum Anliegen kommt. In der Betriebslage wird eine am unteren Ende des Reinölraums 30 vorgesehene Ablassöffnung 42 von einem Verschlussabschnitt 44 des Stützrohrs 22 verschlossen ist. Der Verschlussabschnitt 44 sieht eine umlaufende Dichtung 46 vor.

Beim Entfernen des Deckelelements 14 wird aufgrund eines sich einerseits am Gehäuse 12 und andererseits am Stützrohr 22 abstützenden Federelements 48 das Stützrohr 22 in die Ablasslage verlagert. In der Ablasslage liegen zum einen die die Aussparung 40 umgebenden Bereiche des Ringkragens 28 an den Unterseiten der Aufweitungen 39 an und zum anderen gelangt der Verschlussabschnitt 44 aus dem Bereich der Ablassöffnung 42, so dass über die Ablassöffnung 42 Öl aus dem Aufnahmeraum 18 abströmen kann.

Wie aus den Figuren 1, 3 und 4 deutlich wird, weist das Stützrohr auf der dem Deckelelement 14 abgewandten Seite einen in radialer Richtung geschlossenen, in den Reinölraum 30 eingreifenden Verlängerungsabschnitt 50 auf. Der Verlängerungsabschnitt 50 sieht dabei auf seiner dem Deckelelement 16 abgewandten Seite eine Reinölsaustrittsöffnung 52 vor, aus der gefiltertes Reinöl in den Reinölraum 30 einströmen kann. Von der Reinölaustrittsöffnung 52 strömt das gefilterte Reinöl folglich durch den Reinölraum 30 hin zum sich in radialer Richtung an den Reinölraum 30 anschließenden Ölauslass 32.

Wie insbesondere aus Figur 3 deutlich wird, stützt sich das Federelement 48 einerseits an einer reinölraumseitigen Schulter 54 und andererseits an den Stirnseiten von sich in axialer Richtung erstreckenden Stegen 56 des Verlängerungsabschnitts 50 ab.

Wie bereits erwähnt, befindet sich aufgrund der Federvorspannung des Federelements 48 das Stützrohr 22 bei geöffnetem Deckelelement 14 in der Ablasslage. Um das Stützrohr 22, samt auf dem Stützrohr 22 angeordnetem Filterelement 20, beim Aufschrauben des Deckelelements 14 in die Betriebslage zu überführen, weist das Deckelelement 14 auf seiner dem Aufnahmeraum 18 zugewandten Seite einen Stützrohranlagebereich 58 auf. Der insbesondere in Figur 1 und 2 deutlich zu erkennende Stützrohranlagebereich 58 wird dabei von an der Innenseite des Deckelelements angeordneten, nach radial innen ragenden Rippen 60 gebildet. Die sich in radialer Richtung erstreckenden Stirnseiten der Rippen 60 beaufschlagen dabei die Stirnseite des freien Endes 62 des Stützrohrs 22. Wie insbesondere aus Figur 2 deutlich wird, überragt das Stützrohr 22, beziehungsweise dessen freies Ende 62, in der Betriebslage das Filterelement 20, beziehungsweise dessen Endkappe 21, in axialer Richtung hin zum Deckel. Der Stützrohranlagebereich 58 gewährleistet ferner, dass bei geschlossenem Deckelelement 14 das Stützrohr 22 in der Betriebslage gehalten wird.

Aufgrund des Vorsehens der Stützrohranlagebereiche 58 am Deckelelement 14 wird gewährleistet, dass insbesondere in der Betriebslage das Filterelement 20 vorteilhafterweise keinerlei axiale Kräfte zu übertragen hat. Der Kraftfluss, ausgehend vom Federelement 48, erfolgt über das Stützrohr 22 in das Deckelelement 14.

Zur positionsgenauen Anordnung des Filterelements 20 auf dem Stützrohr 22 sind an der Innenseite des Deckelelements 14 Filterelementanlagebereiche 64 vorgesehen. Die Filterelementanlagebereiche 64 dienen dazu, das Filterelement 20 in seine Betriebsposition beim Aufschrauben des Deckelelements 14 zu verschieben. Die Filterelementauflagebereiche 64 sind dabei ebenfalls durch entsprechend angeordnete Rippen 66 realisiert. Die Stützrohranlagebereiche 58 liegen allerdings weiter radial innen als die Filterelementanlagebereiche 64. Ferner liegen die Stützrohranlagebereiche 58 in axialer Richtung weiter oben als die Filterelementanlagebereiche 64.

Nach längerem Betrieb der Ölfilteranordnung kann der Fall auftreten, dass sich das Dichtungselement 46 beziehungsweise der Verschlussabschnitt 44 am Gehäuse festsetzt. Um ein Lösen eines sich festgesetzten Verschlussabschnitts 44 beziehungsweise Dichtungselements 46 beim Öffnen des Deckelelements zu erreichen, können die Rippen 60 und/oder die Rippen 66 als Mitnahmerippen zum Mitdrehen des Stützrohres 22 und/oder des Filterelements 20 beim Verdrehen des Deckelelements ausgebildet sein. Der Verdrehwinkel des Stützrohres 22, der insbesondere cirka 15° betragen kann, wird durch die sich koaxial zur Mittellängsachse erstreckenden Länge der Zapfenaussparungen 40 bestimmt. Die koaxial einander gegenüberliegenden Seiten der Zapfenaussparungen 40 bilden dabei Drehanschläge 41, 43 für die in die Zapfenaussparungen 40 eingreifenden Verbindungszapfen 38. Aufgrund des Verdrehens kann ein sich festgesetztes Stützrohr 20 gelöst werden, wodurch ein selbsttätiges, axiales Bewegen des Stützrohrs 22 ermöglicht wird. Um ein Mitdrehen des Stürzrohrs 22 beziehungsweise des Filterelements 20 zu erreichen, können am Stützrohr 22 und/oder am Filterelement 20, Mitnahmeaussparungen 68 oder insbesondere keilartige Mitnahmeerhebungen 70, wie sie beispielhaft an den Endscheiben 21 und 23 dargestellt sind, vorgesehen sein.

Um ein unerwünschtes Einströmen von Rohöl aus dem Aufnahmeraum 18 entlang des Verlängerungsabschnitts 50 hin zum Reinölraum 30 zu unterbinden, ist am Verlängerungsabschnitt 50 ein umlaufender Dichtbund 72 angeformt. Der Dichtbund 52 wirkt dabei gegen die Wandung des Reinölraums 30. Der Dichtbund 72 ist dabei derart angeordnet, dass er bei einer axialen Verlagerung des Stützrohrs 22 in die Ablasslage aus dem Bereich der Wandung des Reinölraums gelangt, so dass im Aufnahmeraum 18 vorhandenes Rohöl ungehindert in den Reinölraum 30 einfließen und über die Ablassöffnung 42 aus dem Reinölraum 30 abfließen kann.

Am freien, dem Deckelelement 14 zugewandten Ende 62 des Stützrohrs 22, ist, wie insbesondere aus Figur 1 deutlich wird, ein Überdruckventil 74 angeordnet, das bei einem im Aufnahmeraum 18 erhöhten Druck öffnet, so dass ungefiltertes Rohöl in die Innenseite des Stützrohrs 22 einströmen kann. Aufgrund der als Rippen 60 ausgebildeten Stützrohranlagebereiche 58 kann zwischen den Rippen 60 Öl hin zum Eingang des Überdruckventils 74 ungehindert strömen. Da auch die Filterelementanlagebereiche 64 rippenartig ausgebildet sind, kann auch Öl ungehindert zwischen dem Filterelement 20 und dem Deckel 14 zum Ventil 74 strömen.

In den Figuren 5 bis 7 ist eine zweite erfindungsgemäße Ölfilteranordnung 100 gezeigt, wobei der Ölfilteranordnung 10 gemäß den Figuren 1 bis 4 entsprechende Bauteile mit entsprechenden Bezugszeichen versehen sind.

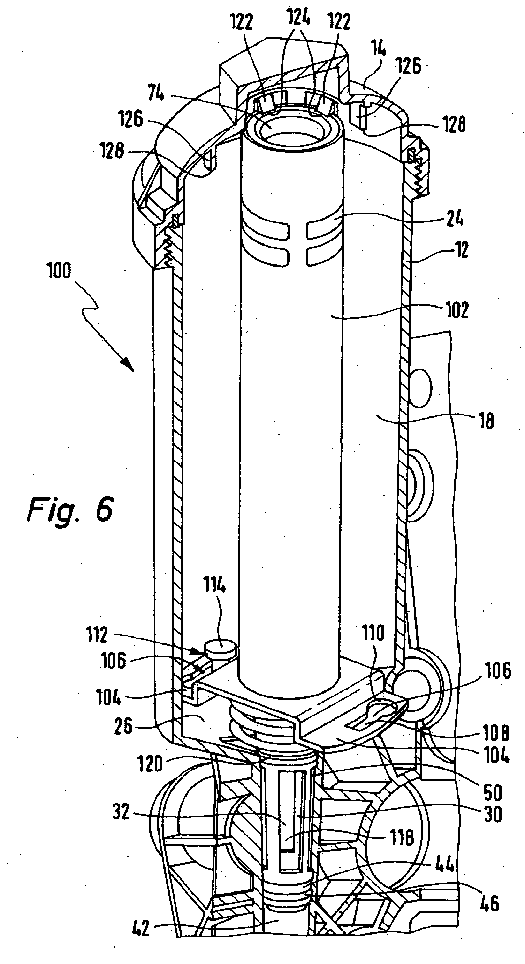

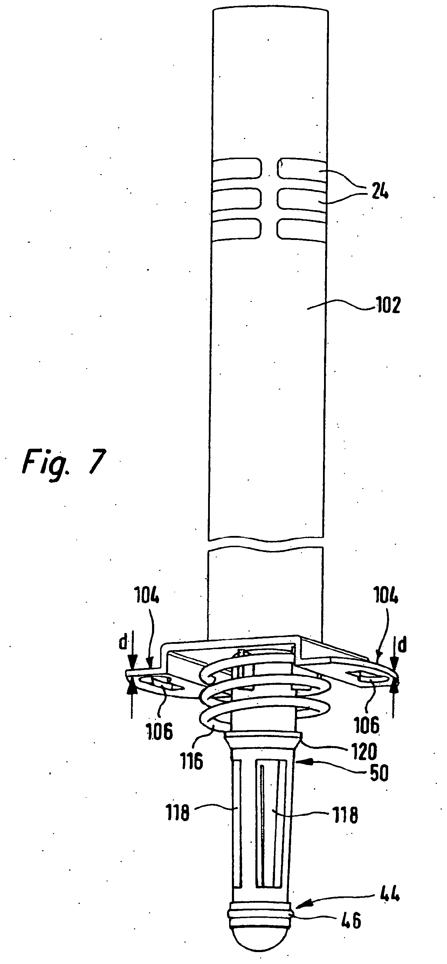

Bei der Ölfilteranordnung 100 sind, wie aus Figur 6 und 7 deutlich wird, am Stützrohr 102 Befestigungsabschnitte in Form von in nach radial außen gewandter Richtung abstehenden Füßen 104 vorgesehen. In den Füßen 104 sind bajonettförmige Zapfenaussparungen 106 vorgesehen, die einen um die Mittellängsachse des Stützrohrs 102 herum verlaufenden Ringsegmentabschnitt 108 und einen sich an den Ringsegmentabschnitt 108 anschließenden Kreisringabschnitt 110 aufweisen.

Wie insbesondere aus Figur 6 deutlich wird, sind am Boden 26 des Aufnahmeraums 18 Verbindungszapfen 112 vorgesehen, die an ihrem freien Ende eine pilzkopfartige Aufweitung 114 aufweisen. Der Durchmesser der pilzkopfartigen Aufweitung 114 ist dabei jeweils wenigstens geringfügig kleiner als die lichte Fläche des Kreisringabschnitts 110 und größer als die Breite des jeweiligen Ringsegmentabschnitts 108. Hierdurch kann das Stützrohr 102 bajonettartig im Aufnahmeraum 18 verbleibend angeordnet werden.

Die Verbindungszapfen 112 können beispielsweise aus Kunststoff sein, wobei die Verbindungszapfen 112 zunächst zylindrisch ausgebildet sein können und erst nach Einsetzen des Stürzrohrs 102 durch beispielsweise Heißvernieten die pilzkopfartige Aufweitung 114 erhalten können.

Erfindungsgemäß kann ebenfalls vorgesehen sein, dass die Verbindungszapfen 112 beispielsweise durch in das Gehäuse einschraubbare, entsprechende Schraubköpfe aufweisende, Schrauben realisiert sein können.

Bei der Ölfilteranordnung 100 gemäß den Figuren 5 bis 7 ist der Abstand vom Boden 26 des Aufnahmeraums 18 zur Unterkante der Aufweitung 114 cirka zwei bis zehnmal Mal und insbesondere cirka 5 mal so groß wie die sich in axialer Richtung erstreckenden Dicke d der beiden Füße 104. Hierdurch wird erreicht, dass eine bedingte Bewegung des Stützrohrs 102 in axialer Richtung ermöglicht wird. Dazu ist das Stützrohr 102 von einer bei geschlossenem Aufnahmeraum 18 eingenommenen Betriebslage in eine bei geöffnetem Aufnahmeraum 18, beziehungsweise bei entnommenem Deckel 14, einnehmbare Ablasslage in axialer Richtung verlagerbar. Zur selbsttätigen Verlagerung des Stützrohrs 102 aus der Betriebslage in die Ablasslage ist ein Federelement 116 vorgesehen, dass sich einerseits am Boden 26 des Aufnahmeraums 18 und andererseits am Stützrohr 102 beziehungsweise auf der dem Boden 26 zugewandten Seite der Füße 104 abstützt.

Wie aus den Figuren 5 und 6 deutlich wird, greift das Stützrohr 102 auf der dem Filterelement 20 beziehungsweise dem Deckel 14 abgewandten Seite in den Reinölraum 30 ein. In dem Abschnitt des Stützrohrs 102, der in den Figuren 5 und 6 gezeigten Betriebslage vollständig im Reinölraum 30 angeordnet ist, sieht das Stützrohr 102 Reinölaustrittsöffnungen 118 vor. Auf der den Füßen 104 zugewandten Seite schließt sich an die Reinölaustrittsöffnungen 118 ein umlaufender Dichtbund 120 an. In der in den Figuren gezeigten Betriebslage wirkt der Dichtbund 120 dichtend gegen einen mit dem Dichtbund 120 korrespondierenden Gehäuseabschnitt im Übergangsbereich vom Aufnahmeraum 18 zum Ölauslass 32. In der Betriebslage fließt das das Filterelement 20 in radialer Richtung durchströmende, gefilterte Reinöl über den Ölauslass 32 aus der Ölfilteranordnung 100 zum Verbraucher.

Beim Öffnen des Gehäusedeckels 14 wird das Stützrohr 102 aufgrund des Federelements 116 nach axial oben so weit verlagert, bis die Füße 104 an der Unterseite der Aufweitungen 114 zum Anliegen kommen. In dieser Ablasslage korrespondieren dann die Reinölaustrittsöffnungen 118 mit dem Aufnahmeraum 18 derart, dass im Aufnahmeraum 18 vorhandenes Öl über die Reinölaustrittsöffnungen 118 in den Reinölraum 30 und weiter in die Ablassöffnung 42 einfließen kann.

Das Stützrohr 102 weist in dem Bereich, in dem es mit dem Filterelement 20 zusammenwirkt, in der Figur 7 angedeutete Durchbrüche 24 auf, durch welche Öl in radialer Richtung hindurchfliesen kann.

Auf der Innenseite des Deckelelements 14 sind am Deckelelement keilartige Stege 122 angeformt, deren dem freien Ende des Stützrohrs 102 zugewandten Seiten Stützrohranlagebereiche 124 bilden. Über diese Stützrohranlagebereiche 124 wird das Stützrohr 102 beim Aufschrauben des Deckelelements 14 auf das Gehäuse 12 in die Betriebslage überführt und bei aufgeschraubtem Deckelelement 14 in der Betriebslage gehalten. Auf der Innenseite des Deckelelements 14 sind ferner sich in axialer Richtung erstreckende Vorsprünge 126 vorgesehen, deren freien Enden Filterelementanlagebereiche 128 bilden. Über die Filterelementanlagebereiche 128 wird das Filterelement 20 in die vorgesehene Betriebslage beim Aufschrauben des Deckelelements 14 geschoben. Die Federkraft des Federelements 116, die das Stützrohr 102 in die Ablasslage beaufschlagt, wird allerdings ausschließlich über die Stützrohranlageabschnitte 126 in das Deckelelement 14 abgeleitet.

Wie aus der Figur 2 deutlich wird, können am Deckelelement 14 Hintergriffsabschnitte 76 vorgesehen sein, die die obere Endkappe 21 des Filterlements 20 bei geschlossenem Deckelelement 14hintergreifen. Die in der Figur 2 dargestellten Hintergriffsabschnitte 76 sind federzungenförmig ausgebildet und weisen eine im wesentlichen senkrecht zur Mittellängsachse der Ölfilteranordnung verlaufende Hinterrastfläche 78 auf. Beim Öffnen des Gehäusedeckels wirkt diese Hinterrastfläche 78 gegen die der Hinterrastfläche 78 zugewandte Kante 80 der Endkappe 21. Hierdurch kann das Filterelement 20 beim Abnehmen des Deckelelements 14 vom Stützrohr 22 abgezogen werden und aus dem Aufnahmeraum 18 herausgenommen werden. Zum Ausgleich von Axialspiel sind, wie in der Figur 2 dargestellt, die Hinterrastflächen 78 bei geschlossenem Deckelelement 14 von der Unterkante 80 der Endkappe 21 beabstandet.

Die Hintergriffsabschnitte 76 sehen auf ihrer radial innen, unteren Seite Einführschrägen 82 vor, aufgrund welcher beim Aufschrauben des Deckelelements 14 die Hintergriffsabschnitte 76 nach radial außen ausweichen können und dann nach axial innen schnappen, wenn die Hinterrastflächen 78 die Unterkante 80 passieren.

Wie im Ausschnitt der Figur 2.1 angedeutet ist, können auch Hintergriffsabschnitte 76 Verwendung finden, die als Deckelement vorgesehene Stege 84ausgebildet sind. Diese Hintergriffsabschnitte sehen nach radial außen verlaufende Aussparungen 86 vor, welche im endmontierten Zustand die Endkappe 21 hintergreifen.

## Patentansprüche

1. Ölfilteranordnung (10, 100) mit einem mit einem Deckelelement (14) verschließbaren, von einem Gehäuse (12) gebildeteten Aufnahmeraum (18) und mit einem im Aufnahmeraum (18) befestigten und mittels eines Federelements federbeaufschlagten Stützrohr (22, 102) zur Aufnahme eines radial mit Öl durchströmbaren Filterelements (20), wobei das Stützrohr (22, 102) in axialer Richtung zwischen einer Betrieblage und einer Ablasslage derart verlagerbar angeordnet ist, dass es bei mit dem Deckelelement (14) verschlossenem Aufnahmeraum (18) in der Betrieblage eine Ablassöffnung (42) verschließt und bei geöffnetem Aufnahmeraum (18) in der Ablasslage eine Ablassöffnung (42) freigibt, wobei das Stützrohr derart im Aufnahmeraum (18) befestigt ist, dass es bei einem Austausch des Filterelements (20) im Gehäuse (12) verbleibt und wobei sich das Federelement einerseits am Stützrohr und andererseits dem Gehäuse abstützt, **dadurch gekennzeichnet, dass** das Deckelelement (14) auf seiner dem Aufnahmeraum (18) zugewandten Seite einen Stützrohranlagebereich (58, 124) derart aufweist, dass bei auf dem Stützrohr (22, 102) angeordnetem Filterelement (20) während des Schließens des Aufnahmeraums (14) das Stützrohr (22, 102) direkt vom Stützrohranlagebereich (58, 124) beaufschlagt und in die Betriebslage verlagert wird, und dass bei geschlossenem Aufnahmeraum (18) der Stützrohranlagebereich (58, 124) das Stützrohr (22, 102) direkt in der Betriebslage hält.

2. Ölfilteranordnung (10, 100) nach Anspruch 1, **dadurch gekennzeichnet, dass** das Stützrohr (22, 102) bei geschlossenem Aufnahmeraum (18) und bei auf dem Stützrohr (22, 102) angeordnetem Filterelement (20) das Filterelement in Richtung zum Deckelelement (14) hin überragt.

3. Ölfilteranordnung (10, 100) nach Anspruch 1 oder 2, **dadurch gekennzeichnet, dass** der Stützrohranlagebereich (58, 124) von an der Innenseite des Deckelelements (14) angeordneten, nach radial innen ragenden Rippen (60) oder nach axial unten ragenden Stegen (122) gebildet wird, zwischen welchen das Filterelement (20) umströmendes Öl zum freien Ende des Stützrohrs (22, 102) gelangen kann.

4. Ölfilteranordnung (10, 100) nach wenigstens einem der vorhergehenden Ansprüche, **dadurch gekennzeichnet, dass** das Deckelelement (14) auf seiner dem Aufnahmeraum (18) zugewandten Seite einen Filterelementanlagebereich (64, 128) derart aufweist, dass während des Schließens des Aufnahmeraums (18) das Filterelement (20) direkt vom Filterelementanlagebereich (64, 128) in eine Betriebsposition verschoben wird.

5. Ölfilteranordnung (10, 100) nach wenigstens Anspruch 3, **dadurch gekennzeichnet, dass** der Stützrohranlagebereich (58, 124) und der Filterelementanlagebereich (64, 128) in axialer Richtung in verschienen Ebenen liegen und/oder dass der Stützrohranlagebereich (58, 124) am Deckelelement (14) radial weiter innen angeordnet ist als der Filterelementanlagebereich (64, 128).

6. Ölfilteranordnung (10, 100) nach wenigstens einem der vorhergehenden Ansprüche, **dadurch gekennzeichnet, dass** im Bereich des Bodens (26) des Aufnahmeraums (18) sich in axialer Richtung erstreckende Verbindungszapfen (38, 112) vorgesehen sind, die mit Zapfenaussparungen (40, 106) zusammenwirken, die an nach radial außen abstehenden Füßen (104) oder an einem in nach radial außen gewandter Richtung abstehenden und wenigstens abschnittsweise umlaufenden Kragen (28) des Stützrohrs (22, 102) angeordnet sind.

7. Ölfilteranordnung (10, 100) nach Anspruch 6, **dadurch gekennzeichnet, dass** die Füße (104) oder der Kragen (28) wenigstens abschnittweise zur Anlage der dem Deckelelement (14) abgewandten Seite des Filterelements (22, 102) dienen.

8. Ölfilteranordnung (10, 100) nach wenigstens einem der Ansprüche 6 oder 7, **dadurch gekennzeichnet, dass** die Verbindungszapfen (38, 112) im Bereich ihrer freien Enden eine Aufweitung (39, 114) aufweisen, wobei der Abstand vom Boden (26) des Aufnahmeraums zur Unterkante der Aufweitung (39, 114) wenigstens geringfügig größer ist als die sich in axialer Richtung erstreckende Dicke (d) der Füße (104) oder des Kragens (28).

9. Ölfilteranordnung (10, 100) nach wenigstens einem der Ansprüche 6 bis 8, **dadurch gekennzeichnet**, die Zapfaussparungen (40, 106) derart ausgebildet sind, dass das Stützrohr (22, 102) um seine Mittellängsachse wenigstens bedingt verdrehbar ist.

10. Ölfilteranordnung (10, 100) nach wenigstens einem der vorhergehenden Ansprüche, **dadurch gekennzeichnet, dass** das Deckelelement (14) Mitnahmeabschnitte (60, 122) zum wenigstens bedingten Mitdrehen des Stützrohres (22, 102) und/oder des Filterelements (20) beim Verdrehen des Deckelelements aufweist.

11. Ölfilteranordnung (10, 100) nach wenigstens einem der vorhergehenden Ansprüche, **dadurch gekennzeichnet, dass** das Stützrohr (22, 102) auf der dem Deckelelement (14) abgewandten Seite und in dem vom Filterelement (20) nicht abgedeckten Bereich einen in radialer Richtung geschlossenen, in einen einen Ölauslass (32) aufweisenden Reinölraum (30) eingreifenden Verlängerungsabschnitt (50) aufweist, der an seinem dem Deckelelement (14) abgewandten Bereich wenigstens eine Reinölaustrittsöffnung (52, 118) aufweist.

12. Ölfilteranordnung (10, 100) nach Anspruch 11, **dadurch gekennzeichnet, dass** an den Verlängerungsabschnitt (50) ein umlaufender, in radialer Richtung überstehender und in der Betriebslage den Aufnahmeraum (18) vom Reinölraum (30) trennender Dichtbund (72, 120) angeformt ist.

13. Ölfilteranordnung (10, 100) nach wenigstens einem der vorhergehenden Ansprüche, **dadurch gekennzeichnet, dass** das Deckelelement (14) auf seiner dem Aufnahmeraum zugewandten Seite Hintergriffsabschnitte (76) zum Hintergreifen von Filterelementabschnitten (21) derart aufweist, dass das Filterelement (20) mittels dem Deckelelement (14) beim Abnehmen des Deckelelements vom Stützrohr (22, 102) abziehbar und aus dem Aufnahmeraum (18) herausnehmbar ist.

14. Ölfilteranordnung (10, 100) nach Anspruch 13, **dadurch gekennzeichnet, dass** die Hintergriffsabschnitte (76) auf der dem Filterelement (20) zugewandten Seite Einführschrägen (82) derart vorsehen, dass bei auf das Stützrohr (22, 102) aufgesetztem Filterelement (20) und bei anschließendem Schließen des Deckelelements (14) die Hintergriffsabschnitte (76) die Filterelementabschnitte hintergreifen.

15. Ölfilteranordnung (10, 100) nach Anspruch 13 oder 14, **dadurch gekennzeichnet, dass** die Hintergriffsabschnitte (76) als im wesentlichen parallel zur Mittellängsachse des Filterelements (14) vom Deckelelement (14) abragende Federzungen mit Hinterrastflächen (78) zum Hintergreifen der (21) Filterelementabschnitte ausgebildet sind.

## Claims

1. Oil filter assembly (10, 100) comprising a housing (12) having a receiving chamber (18) which can be closed by a cover element (14), and a supporting tube (22, 102), which is fixed in the receiving chamber (18) and is spring-loaded by a spring element for receiving a filter element (20) through which oil can flow in a radial direction, wherein the supporting tube (22, 102) is displaceably disposed in the axial direction between an operating position and a drain position such that it closes a drain opening (42) in the operating position when the receiving chamber (18) is closed by the cover element (14), and opens a drain opening (42) in the drain position when the receiving chamber (18) is opened, wherein the supporting tube is secured in the receiving chamber (18) to remain in the housing (12) when the filter element (20) is exchanged, the spring element being supported on one side by the supporting tube and on the other side by the housing, **characterized in that** the cover element (14) has a supporting tube abutment area (58, 124) on its side facing the receiving chamber such that, when the filter element (20) is disposed on the supporting tube (22, 102), the supporting tube (22, 102) is directly loaded by the supporting tube abutment area (58, 124) and displaced into the operating position while the receiving chamber (14) is being closed, wherein, when the receiving chamber (18) is closed, the supporting tube abutment area (58, 124) directly keeps the supporting tube (22, 102) in the operating position.

2. Oil filter assembly (10, 100) according to claim 1, **characterized in that** the supporting tube (22, 102) projects past the filter element in the direction towards the cover element (14) when the receiving chamber (18) is closed and the filter element (20) is disposed on the supporting tube (22).

3. Oil filter assembly (10, 100) according to claim 1 or 2, **characterized in that** the supporting tube abutment area (58, 124) is formed by ribs (60) that project in a radially inward direction and are disposed on the inner side of the cover element (14) or webs (122) that project in an axially downward direction, between which the oil that flows around the filter element (20) can flow to the free end of the supporting tube (22, 102).

4. Oil filter assembly (10, 100) according to at least one of the preceding claims, **characterized in that** the cover element (14) has a filter element abutment area (64, 128) on its side facing the receiving chamber (18) such that the filter element (20) is directly displaced by the filter element abutment area (64) into an operating position while the receiving chamber (18) is being closed.

5. Oil filter assembly (10, 100) according to at least claim 3, **characterized in that** the supporting tube abutment area (58, 124) and the filter element abutment area (64, 128) are located at different planes in the axial direction and/or the supporting tube abutment area (58, 124) is disposed on the cover element (14) at a radially further inward position than the filter element abutment area (64, 128).

6. Oil filter assembly (10, 100) according to at least one of the preceding claims, **characterized in that** connecting pins (38, 112) are provided in the area of the bottom (26) of the receiving chamber (18), which extend in the axial direction and cooperate with pin recesses (40, 106), which are disposed on feet (104) that project in a radially outward direction or on a collar (28) of the supporting tube (22, 102), which projects in a radially outwardly facing direction and is circumferential at least in sections.

7. Oil filter assembly (10, 100) according to claim 6, **characterized in that** at least sections of the feet (104) or the collar (28) are used as an abutment for the side of the filter element (22, 102) facing away from the cover element (14).

8. Oil filter assembly (10, 100) according to at least one of the claims 6 or 7, **characterized in that** the connecting pins (38, 112) have a widening (39, 114) in the area of their free ends, wherein the separation between the bottom (26) of the receiving chamber and the lower edge of the widening (39, 114) is at least slightly larger than the axial thickness (d) of the feet (104) or of the collar (28).

9. Oil filter assembly (10, 100) according to at least one of the claims 6 through 8, **characterized in that** the pin recesses (40, 106) are formed such that the supporting tube (22, 102) can be rotated about its center longitudinal axis by at least a limited degree.

10. Oil filter assembly (10, 100) according to at least one of the preceding claims, **characterized in that** the cover element (14) has carrier sections (60, 122) that also rotate the supporting tube (22, 102) and/or the filter element (20) at least to a limited degree when the cover element is turned.

11. Oil filter assembly (10, 100) according to at least one of the preceding claims, **characterized in that** the supporting tube (22, 102) has an extension section (50) on the side facing away from the cover element (14) and in the area that is not covered by the filter element (20), which is closed in the radial direction, engages in a purified oil chamber (30) having an oil outlet (32), and has at least one purified oil outlet opening (52, 118) in its area facing away from the cover element (14).

12. Oil filter assembly (10, 100) according to claim 11, **characterized in that** a circumferential sealing collar (72, 120) is formed on the extension section (50), which projects in the radial direction and separates the receiving chamber (18) from the purified oil chamber (30) in the operating position.

13. Oil filter assembly (10, 100) according to at least one of the preceding claims, **characterized in that** the side of the cover element (14) facing the receiving chamber is provided with engagement sections (76) for engaging behind filter element sections (21) such that the filter element (20) can be removed from the supporting tube (22, 102) by means of the cover element (14) when the cover element is removed, and can be removed from the receiving chamber (18).

14. Oil filter assembly (10, 100) according to claim 13, **characterized in that** the engagement sections (76) have insertion slopes (82) on the side facing the filter element (20) such that, when the filter element (20) is disposed onto the supporting tube (22, 102) and the cover element (14) is subsequently closed, the engagement sections (76) engage behind the filter element sections.

15. Oil filter assembly (10, 100) according to claim 13 or 14, **characterized in that** the engagement sections (76) are designed as spring tabs that project downwardly from the cover element (14) substantially parallel to the center longitudinal axis of the filter element (14) and have engagement surfaces (78) for engaging behind the filter element sections (21).

## Revendications

1. Système de filtre à huile (10, 100), comportant un logement (18) formé par un boîtier (12) et pouvant être fermé par un couvercle (14), et comportant un tube de support (22, 102), qui est fixé dans le logement (18) et est apte à être sollicité par un ressort et qui est destiné à recevoir un élément de filtrage (20) traversé radialement par l'huile, le tube de support (22, 102) étant monté mobile dans la direction axiale entre une position de service et une position de vidage, de telle sorte qu'il obture un orifice de sortie (42) dans la position de service lorsque le logement (18) est fermé par le couvercle (14), et qu'il libère un orifice de sortie (42) dans la position de vidage lorsque le logement (18) est ouvert, ledit tube de support étant fixé dans le logement (18) de telle sorte qu'il reste dans le boîtier (12) lors du remplacement de l'élément de filtrage (20) et le ressort prenant appui sur le tube de support, d'une part, et sur le boîtier, d'autre part, **caractérisé en ce que** le couvercle (14), sur sa face orientée vers le logement (18), comporte une zone de contact (58, 124) avec le tube de support, de telle sorte que, lorsque l'élément de filtrage (20) est disposé sur le tube de support (22, 102), le tube de support (22, 102) est sollicité pendant la fermeture du logement (18) directement par la zone de contact (58, 124) avec le tube de support et est déplacé dans la position de service, et **en ce que**, lorsque le logement (18) est fermé, la zone de contact (58, 124) avec le tube de support maintient le tube de support (22, 102) directement dans la position de service.

2. Système de filtre à huile (10, 100) selon la revendication 1, **caractérisé en ce que** le tube de support (22, 102) s'avance au-delà de l'élément de filtrage vers le couvercle (14) lorsque le logement (18) est fermé et lorsque l'élément de filtrage (20) est disposé sur le tube de support (22, 102).

3. Système de filtre à huile (10, 100) selon la revendication 1 ou 2, **caractérisé en ce que** la zone de contact (58, 124) avec le tube de support est formée par des nervures (60), disposées sur la face intérieure du couvercle (14) et s'avançant radialement vers l'intérieur ou par des ergots (122) s'avançant axialement vers le bas, entre lesquels l'huile circulant autour de l'élément de filtrage (20) peut parvenir vers l'extrémité libre du tube de support (22, 102).

4. Système de filtre à huile (10, 100) selon l'une quelconque des revendications précédentes, **caractérisé en ce que** le couvercle (14), sur sa face orientée vers le logement (18), comporte une zone de contact (64, 128) avec l'élément de filtrage, de telle sorte que pendant la fermeture du logement (18), l'élément de filtrage (20) est déplacé directement dans une position de service par la zone de contact (64, 128) avec l'élément de filtrage.

5. Système de filtre à huile (10, 100) selon au moins la revendication 3, **caractérisé en ce que** la zone de contact (58, 124) avec le tube de support et la zone de contact (64, 128) avec l'élément de filtrage sont situées dans des plans différents dans la direction axiale et/ou **en ce que** la zone de contact (58, 124) avec le tube de support est disposée sur le couvercle (14) plus radialement vers l'intérieur que la zone de contact (64, 128) avec l'élément de filtrage.

6. Système de filtre à huile (10, 100) selon l'une quelconque des revendications précédentes, **caractérisé en ce que** dans la zone du fond (26) du logement (18) sont prévus des tétons d'assemblage (38, 112), orientés dans la direction axiale et coopérant avec des évidements (40, 106) qui sont disposés sur des pieds (104) en saillie radiale vers l'extérieur ou sur le tube de support (22, 102), plus précisément sur un collet (28) de celui-ci, périphérique au moins par zones et en saillie dans une direction orientée radialement vers l'extérieur.

7. Système de filtre à huile (10, 100) selon la revendication 6, **caractérisé en ce que** les pieds (104) ou le collet (28) forment au moins par zones un appui pour le côté de l'élément de filtrage (20) détourné du couvercle (14).

8. Système de filtre à huile (10, 100) selon la revendication 6 ou 7, **caractérisé en ce que** les tétons d'assemblage (38, 112), dans la zone de leurs extrémités libres, comportent un élargissement (39, 114), la distance entre le fond (26) du logement et le bord inférieur de l'élargissement (39, 114) étant au moins légèrement supérieure à l'épaisseur (d), orientée dans la direction axiale, des pieds (104) ou du col (28).

9. Système de filtre à huile (10, 100) selon l'une au moins des revendications 6 à 8, **caractérisé en ce que** les évidements (40, 106) pour les tétons sont réalisés de telle sorte que le tube de support (22, 102) peut tourner, au moins sous condition, autour de son axe médian longitudinal.

10. Système de filtre à huile (10, 100) selon l'une quelconque des revendications précédentes, **caractérisé en ce que** le couvercle (14) comporte des parties d'entraînement (60, 122) pour entraîner en rotation, au moins sous condition, le tube de support (22, 102) et/ou l'élément de filtrage (20) lors de la rotation du couvercle.

11. Système de filtre à huile (10, 100) selon l'une quelconque des revendications précédentes, **caractérisé en ce que** le tube de support (22, 102), sur le côté orienté vers le couvercle (14) et dans la zone non couverte par l'élément de filtrage (20), comporte une partie de prolongement (50), qui s'engage dans une chambre à huile non polluée (30), fermée dans la direction axiale et munie d'un orifice de sortie d'huile (32), et qui, dans sa zone détournée du couvercle (14), comporte au moins un orifice de sortie (52, 118) pour l'huile non polluée.

12. Système de filtre à huile (10, 100) selon la revendication 11, **caractérisé en ce que** sur la partie de prolongement (50) est formé un bourrelet d'étanchéité (72, 120) périphérique, en saillie dans la direction radiale et séparant le logement (18) de la chambre à huile non polluée (30) dans la position de service.

13. Système de filtre à huile (10, 100) selon l'une quelconque des revendications précédentes, **caractérisé en ce que** le couvercle (14), sur sa face orientée vers le logement, comporte des parties détalonnées (76) pour enserrer par derrière des parties (21) de l'élément de filtrage, de telle sorte que l'élément de filtrage (20) peut être détaché au moyen du couvercle (14) au moment où celui-ci est retiré du tube de support (22, 102) et peut être retiré hors du logement (18).

14. Système de filtre à huile (10, 100) selon la revendication 13, **caractérisé en ce que** les parties détalonnées (76), sur le côté orienté vers l'élément de filtrage (20), prévoient des chanfreins d'introduction (82), de telle sorte que les parties détalonnées (76) enserrent par derrière les parties de l'élément de filtrage lorsque l'élément de filtrage (20) est posé sur le tube de support (22, 102) et au moment de la fermeture consécutive du couvercle (14).

15. Système de filtre à huile (10, 100) selon la revendication 13 ou 14, **caractérisé en ce que** les parties détalonnées (76) sont réalisées sous forme de languettes flexibles, formant sur le couvercle (14) des saillies sensiblement parallèles à l'axe médian longitudinal de l'élément de filtrage (20) et munies de surfaces de serrage (78) pour enserrer par derrière les parties (21) de l'élément de filtrage.
